# EUROPEAN PATENT SPECIFICATION

(11) **EP 2 536 792 B1**
(45) Date of publication and mention of the grant of the patent: **24.08.2016**
(21) Application number: 11708556.3
(22) Date of filing: 11.02.2011
(51) Int. Cl.: C09D 5/00

(54) **TITANIUM DIOXIDE**
TITANDIOXID
DIOXYDE DE TITANE

(30) Priority: 17.02.2010 GB 201002700
(43) Date of publication of application: 26.12.2012
(73) Proprietor: Huntsman P&A UK Limited, Stockton-on-Tees, TS22 5FD (GB)
(72) Inventor: EDWARDS, John, L., Durham DH1 4AP (GB); LOWRY, Karl, Stockton-on-Tees Durham TS15 9TW (GB); PARNHAM, Emily, Ruth, Stockton-On-Tees Durham TS20 1SL (GB); REID, Sean, Ashbourne Derbyshire DE6 1GZ (GB); ROBB, John, Stockton-on-Tees Durham TS18 5EG (GB); TONKIN, Rebecca, Louise, Stockton-on-Tees Durham TS17 0RN (GB)
(74) Representative: Johnson, Yvonne Catherine
(86) International application number: PCT/GB2011/050267
(87) International publication number: WO 2011/101657

(56) References cited:
- WO-A1-01/29137
- WO-A1-02/057374
- WO-A1-2006/058782
- WO-A2-02/12405
- WO-A2-2009/134461
- DE-C1- 10 204 829

## Description

### FIELD OF THE INVENTION

This disclosure, in general, relates to improved colored solar reflective systems, colored compositions containing the colored solar reflective systems, and to various uses of such colored compositions.

### BACKGROUND

New technologies are continuously being developed to improve energy efficiency. One such technology is the use of infrared reflective pigments in coatings positioned on a building's (or other object's) exterior. As one is aware, the sun emits about 50% of its energy as near-infrared radiation. When this near-infrared radiation is absorbed, it is physically converted into heat. Coatings containing infrared reflective pigments work by reflecting away sunlight and by blocking the transfer of heat thereby reducing the heat load to the building. For example, white pigments, such as titanium oxide, have been used in coatings to reflect a majority of the sun's energy. Oftentimes, it is desirable to provide a colored coating in place of white for aesthetic reasons. However, the selection of non-white pigments that are available for use is limited since they tend to absorb more of the sun's energy than is desired leading to a marked reduction in the above-described effect. Thus, various systems have been and continue to be developed to provide colored coatings having improved solar reflectance.

For example, U.S. Pat. No. 5,540,998 describes a system in which two or more non-white pigments having particle diameters of 50 µm or less are combined to yield a color of low lightness, and in particular, achromatic black. U.S. Pat. No. 5,962,143 further describes a dark colored coating that contains one or more black pigments, one or more non-white pigments and silicic acid.

In U.S. Pat. No. 6,174,360, the use of complex inorganic colored pigments (CICP's) in coatings is taught to exhibit dark drab colors in the visible portion along with reflectivity in the near-infrared portion of the electromagnetic spectrum.

U.S. Pat. No. 6,336,397 describes an infrared reflective system containing two or more layers with one layer containing a resin and pigment which provides the desired color and another layer containing a pigment which provides infrared reflectance. U.S. Pat. Publ. No. 2009/0268278 also discloses a two layer sheet-like infrared reflective system having a top layer consisting of a synthetic resin and an organic pigment and a bottom layer consisting of a synthetic resin and a titanium oxide-based white pigment.

In addition, U.S. Pat. No. 6,521,038 teaches a near-infrared reflecting composite pigment containing a near-infrared non-absorbing colorant and a white pigment that is coated with such a colorant. The composite pigment may then be used as a coloring agent in coatings.

Finally, WO 2009/136141 describes the use of near-infrared-scattering particulate material which provides high reflection of near-infrared radiation and diminished reflectance of visible light in combination with various non-white colorants.

Although each provides solar reflectance, some of the disadvantages in using these currently available systems include: they provide relatively pale coloring since a high level of conventional titanium dioxide is needed to give the desired level of solar reflection; application of two or more layers is both time consuming and costly and can result in coatings having a patchy or non-uniform appearance that tends to lighten over time; and impurities contained within the systems can lead to absorptions in the near-infrared part of the spectrum resulting in a reduction of solar reflectance. As such, alternative systems which exhibit enhanced solar reflectivity in a wide range of dark or more intense uniform colors than is otherwise achievable is still highly desirable.

### SUMMARY

The present invention provides a colored solar reflective system including a particulate material having a large average particle size and an organic pigment which is chosen based on the following properties: (i) it must strongly absorb in the visible light region; (ii) it must negligibly absorb in the near-infrared light region; and (iii) it must negligibly scatter light in the visible light region. The solar reflective system, which may be used in a coating composition or as a composition from which articles can be formed, exhibits a dark, intense color while also providing enhanced total solar reflectance.

Specifically, in a first aspect, the present invention as claimed provides a colored solar reflective system containing (1) a particulate material having a substantially rutile crystal habit and having an average particle size of between about 0.6 µm and about 1.7 µm, wherein the particulate material is selected from the group consisting of: titanium dioxide, doped titanium dioxide and a mixture thereof; and (2) an organic pigment having a maximum absorption coefficient of about 5,000 mm⁻¹ or greater in the visible light region, a maximum scattering coefficient of about 500 mm⁻¹ or less in the visible light region, and an average absorption coefficient of about 50 mm⁻¹ or less in the near-infrared light region, wherein the organic pigment is one or more organic particle that is substantially insoluble in the application medium in which it is dispersed and which imparts color.

In the claimed invention, the organic pigment having the above properties may be a single organic pigment or it may be a mixture of organic pigments where each pigment has the above properties.

In a second aspect, the invention as claimed provides a method for preparing a colored solar reflective system according to the present invention, the method comprising: mixing the particulate material as defined above in the first aspect with the organic pigment as defined above in the first aspect.

In another aspect, the colored solar reflective system may be dispersed within a vehicle to form a colored composition. The colored composition may then be used as a one layer coating or as a composition from which articles can be formed. Specifically, in a third aspect, the invention as claimed provides a product which is (a) a colored composition or (b) a one layer solar reflective colored coating, the product comprising: a colored solar reflective system according to the present invention and a vehicle, wherein the particulate material and the organic pigment are dispersed within the vehicle.

In a fourth aspect of the invention as claimed, there is provided the use of the colored composition as described above in the third aspect, as a paint, ink or coating or as a composition from which an article can be formed.

In a fifth aspect of the invention as claimed, there is provided a structure, wherein: (i) the structure comprises the one layer solar reflective colored coating as described above in the third aspect or (ii) one or more surfaces of the structure are coated with the one layer solar reflective colored coating as described above in the third aspect.

In a sixth aspect of the invention as claimed, there is provided a method for reducing the energy consumption of a structure, the method comprising: applying the one layer solar reflective colored coating described above in the third aspect to one or more surfaces of the structure, wherein the one layer solar reflective colored coating causes the surface temperature of the resultant coated surface to be lowered relative to a surface temperature of a surface coated with a non-reflective coating of the same color such that less energy is needed to cool the interior of the structure.

In a seventh aspect of the invention as claimed, there is provided an article comprising the colored composition described above in the third aspect, wherein the article has a lightness value L* of 75 or less.

In an eighth aspect of the invention as claimed, there is provided the use of the colored composition described above in the third aspect, or the one layer solar reflective colored coating described above in the third aspect, as a one layer solar reflective colored coating.

### BRIEF DESCRIPTION OF FIGURES

For a detailed understanding and better appreciation of the present invention, reference should be made to the following detailed description of the invention, taken in conjunction with the accompanying figure.

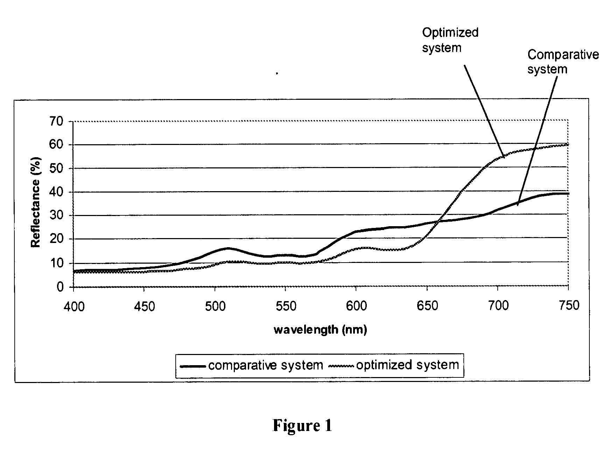

Figure 1 is a graph depicting the reflectance for ral 8007 (fawn brown) at various wavelengths. It shows reflectance against wavelength for ral 8007 (fawn brown) for a comparative system and an inventive reflective system.

### DESCRIPTION OF THE PREFERRED EMBODIMENT(S)

In this specification and in the claims which follow, reference will be made to a number of terms which shall be understood to have the following meanings.

The term "visible light" refers to electromagnetic radiation having a wavelength in the range of 400 nm to 760 nm of the electromagnetic spectrum.

The term "near-infrared light" refers to electromagnetic radiation having a wavelength within the range of 760 nm to about 2500 nm of the electromagnetic spectrum.

The term "total solar reflectance" or "TSR" refers to the fraction of the incident solar energy (∼360 nm-2500 nm) that is reflected by a surface in question. It is a ratio of energies of the reflected wave to that of the incident wave. For example, a reflectance of 0.8 equals a reflectance of 80% of the incident wave. The total solar reflectance may be determined as specified in standard test method ASTM E903, the entire contents of which are incorporated herein by reference.

The term "organic pigment" refers to an organic particle(s) substantially insoluble in the application medium in which it's dispersed and which imparts color.

The term "energy consumption" refers to the usage or consumption of conventional forms of energy, for example, electricity, gas, etc. Thus, the reduction of energy consumption in a structure pertains to lower usage of, for example, electricity in the structure.

The term "structure" refers to any object which may be exposed to the sun, for example, a building, an automobile, a train, a container, a vessel, piping, a road, flooring, a driveway, a parking lot, sidewalk, a swimming pool, a deck, a textile, an airplane, a ship, a submarine, a window profile, siding, roofing granules, roofing shingles, an agricultural film, or a glass product. The material of the structure is not limited; therefore, it may comprise metal, glass, ceramic, plastic, concrete, asphalt, wood, tile, natural or artificial fibers, rubber, etc.

The present disclosure in general relates to colored solar reflective systems. It has been surprisingly found that the colored solar reflective systems of the present invention allow color to be decoupled from near-infrared reflection properties, that is, the near-infrared reflectance and photocatalytic properties of the colored systems may be varied independently from color. Thus, once a desired color has been achieved with certain organic pigments, the desired solar reflectance properties, which are dependant on the particulate concentration, may then be independently attained.

The colored solar reflective systems also provide improved infrared reflectivity in structures made with or covered by these systems while also providing previously inaccessible colors and tones, including, but not limited to, the blue part of the color spectrum. For example, application of the present colored solar reflective system to an exterior surface of a structure, such as a wall or roof, allows the structure to exhibit increased total solar reflectance. This, in turn, results in a lower surface temperature and heat transfer through the coated structure. Therefore, the interior temperature of the structure is cooler and accordingly, less energy is needed to cool the interior of the structure. In addition, the potential loss by evaporation of any volatile components contained within the structure is reduced. Furthermore, structural integrity is improved since damage caused by heat, such as cracks and thermal warping, is significantly diminished. Finally, the colored solar reflective system may be applied in a single layer coating reducing time and cost while providing a consistent coloring throughout the applied coating.

Accordingly, in the present invention as claimed, the colored solar reflective system includes (1) a particulate material having a substantially rutile crystal habit and having an average particle size of between about 0.6 µm and about 1.7 µm, and more preferably between about 0.7 µm and about 1.4 µm, wherein the particulate material is selected from the group consisting of: titanium dioxide, doped titanium dioxide and a mixture thereof; and (2) an organic pigment having a maximum absorption coefficient of about 5,000 mm⁻¹ or greater, preferably about 10,000 mm⁻¹ or greater, and more preferably about 15,000 mm⁻¹ or greater in the visible light region, a maximum scattering coefficient of about 500 mm⁻¹ or less, preferably about 250 mm⁻¹ or less, and more preferably about 100 mm⁻¹ or less in the visible light region, and an average absorption coefficient of about 50 mm⁻¹ or less, preferably about 30 mm⁻¹ or less, and more preferably about 10 mm⁻¹ or less in the near-infrared light region, wherein the organic pigment is one or more organic particle that is substantially insoluble in the application medium in which it is dispersed and which imparts color.

As noted above, the particulate material used in the claimed invention is selected from titanium dioxide, doped titanium dioxide, and a mixture thereof

The titanium dioxide useful in the present invention is one capable of scattering near-infrared light while also providing low scattering and low absorbance of visible light. Such properties may be obtained when the titanium dioxide has an average particle size of between about 0.6 µm and about 1.7 µm, and more preferably between about 0.7 µm and about 1.4 µm. It has been surprisingly found that such titanium dioxide reflects near-infrared light at an unusually high level while also exhibiting noticeably diminished reflectance of visible light when compared to conventional titanium dioxide pigment. Furthermore, in contrast to conventional titanium dioxide, which is very reflective of visible light making the color of conventional colored systems in which it is used pale, the titanium dioxide of the present invention blends with the organic pigment without unduly affecting the color of the system to provide a more widely available pallet of dark, or more intensely colored systems.

As one skilled in the art is aware, crystal size is distinct from particle size. Crystal size relates to the size of the fundamental crystals which make up the particulate material. These crystals may then aggregate to some degree to form larger particles. For example, conventional titanium dioxide in the rutile crystal habit has a crystal size of about 0.17 µm - 0.29 µm and a particle size of about 0.25 µm - 0.40 µm while conventional titanium dioxide in the anatase crystal form has a crystal size of about 0.10 µm - 0.25 µm and a particle size of about 0.20 µm - 0.40 µm. The particle size is thus affected by factors such as the crystal size as well as milling techniques used during production, such as dry, wet or incorporative milling. Accordingly, in some embodiments, the particle size of the titanium dioxide is greater than the crystal size. In still other embodiments, the particle size of the titanium dioxide is about equal to the crystal size.

The crystal size and particle size of the titanium dioxide may be determined by methods well known to those skilled in the art. For example, the crystal size may be determined by transmission electron microscopy on a rubbed out sample with image analysis of the resulting photograph. The results of the crystal size may further be validated by reference using latex NANOSHPHERE™ Size Standards (available from Thermo Scientific). A method which may be used for determining the particle size of the titanium dioxide includes X-ray sedimentation.

Because of higher refractive index, the particulate material contains titanium dioxide substantially in a rutile crystal habit. Thus, according to another embodiment, greater than 90% by weight of the titanium dioxide, preferably greater than 95% by weight of the titanium dioxide, and even more preferably greater than 99% by weight of the titanium dioxide, based on the total weight of the particulate material, is in the rutile crystal habit. In still another embodiment, the particulate material may further contain titanium dioxide which is in an anatase crystal form.

Known processes which may be used to prepare the titanium dioxide include, but are not limited to, the sulfate process, chloride process, fluoride process, hydrothermal process, aerosol process and leaching process; however, each such known process is modified by one or more of the following conditions:
(a) treating at a higher temperature, for example, 900°C or higher;
(b) treating for a longer period of time, for example, 5 hours or more;
(c) increasing or reducing typical levels of growth moderators present during the process; and
(d) reducing the typical level of rutile seeds.

Thus, for example, the titanium dioxide may be prepared by the sulfate process which generally includes:
(i) reacting a titaniferous feedstock with sulfuric acid to form a solid, water soluble reaction cake;
(ii) dissolving the reaction cake in water and/or weak acid to produce a titanium sulfate solution;
(iii) hydrolyzing the titanium sulfate solution to convert titanium sulfate to titanium dioxide hydrate; and
(iv) separating the precipitated titanium dioxide hydrate from the solution and calcining to obtain titanium dioxide

wherein the process is modified by one or more of the conditions (a) - (d) described above. In one embodiment the process is modified by condition (a); in another the process is modified by condition (b); in another the process is modified by condition (c); and in another the process is modified by condition (d).

The titanium dioxide of the present disclosure may be white or translucent or it may be colored. Preferably, the titanium dioxide is white. Thus, in one embodiment, the titanium dioxide has a lightness value L* (CIE L*a*b* color space) greater than 95, an a* value less than 5 and a b* value less than 5.

Preferably, the particulate material contains greater than 70% by weight of titanium dioxide, based on the total weight of the particulate material. In another embodiment, the particulate material contains greater than 80% by weight, preferably greater than 90% by weight, more preferably greater than 95% by weight and even more preferably greater than 99.5% by weight of titanium dioxide, based on the total weight of the particulate material.

In another embodiment, the particulate material is a doped titanium dioxide. As used herein, "doped titanium dioxide" refers to the titanium dioxide of the present disclosure but further including one or more dopants which have been incorporated during preparation of the titanium dioxide. The dopants, which may be incorporated by known processes, may include, but are not limited to, calcium, magnesium, sodium, vanadium, chromium, manganese, iron, nickel, aluminum, antimony, phosphorus, niobium or cesium. The dopant may be incorporated in an amount of no more than 30% by weight, preferably no more than 15% by weight, and more preferably no more than 5% by weight, based on the total weight of the titanium dioxide. For example the dopant may be incorporated in an amount of from 0.1 to 30% by weight, or 0.5 to 15% by weight, or 1 to 5% by weight, relative to the total weight of the titanium dioxide. Because of its higher refractive index, such doped titanium dioxide may be recognized by being substantially in a rutile crystal habit. In other embodiments, the particulate material may further contain doped titanium dioxide in an anatase crystal form.

In still another embodiment, the particulate material may further be treated as known in the art with a coating agent to form coated titanium dioxide or coated doped titanium dioxide. For example, the particulate material may be dispersed in water along with the coating agent. The pH of the solution may then be adjusted to precipitate the desired hydrated oxide to form a coating on the surface of the particulate material. After coating, the particulate material may be washed and dried before being ground, for example, in a fluid energy mill or micronizer, to separate particles stuck together by the coating. At this milling stage, an organic surface treatment, may also be applied if desired.

Coating agents suitable for use include those commonly used to coat an inorganic oxide or hydrous oxide onto the surface of particles. Typical inorganic oxides and hydrous oxides include one or more oxides and/or hydrous oxides of silicon, aluminum, titanium, zirconium, magnesium, zinc, cerium, phosphorus, or tin, for example, Al₂O₃, SiO₂, ZrO₂, CeO₂, P₂O₅, sodium silicate, potassium silicate, sodium aluminate, aluminum chloride, aluminum sulphate, or a mixture thereof The amount of coating coated onto the surface of the titanium dioxide or doped titanium dioxide may range from about 0.1% by weight to about 20% by weight of the inorganic oxide and/or hydrous oxide relative to the total weight of the titanium dioxide or doped titanium dioxide.

Organic surface treatments suitable for application at the milling stage include polyols, amines, alkyl phosphonic acids and silicone derivatives. For example, the organic surface treatment may be trimethylolpropane, pentaerythritol, triethanolamine, n-octyl phosphonic acid or trimethylolethane.

In addition to the particulate material described above, the colored solar reflective system also includes an organic pigment. According to various embodiments, the organic pigment may be selected from a black, brown, blue, cyan, green, violet, magenta, red, orange, yellow pigment and a mixture thereof The selection will depend on the necessary organic pigments needed to achieve the desired color, for example, vibrant blues, reds, browns and greens. The organic pigment may be obtained from commercial sources and is chosen based on the following properties: (i) it must strongly absorb in the visible light region; (ii) it must negligibly absorb in the near-infrared light region; and (iii) it must negligibly scatter light in the visible light region. By "strongly absorb in the visible light region", the organic pigment must have a maximum absorption coefficient of at least about 5,000 mm⁻¹, preferably at least about 10,000 mm⁻¹, and more preferably at least about 15,000 mm⁻¹ in the visible light region By "negligibly absorb in the near-infrared light region", the organic pigment must have an average absorption coefficient of less than about 50 mm⁻¹, preferably less than about 30 mm⁻¹, more preferably less than about 15 mm⁻¹, and even more preferably less than about 10 mm⁻¹ in the near-infrared light region. By "negligibly scatter light in the visible light region", the organic pigment must have a maximum scattering coefficient of less than about 500 mm⁻¹, preferably less than about 250 mm⁻¹, and more preferably less than about 100 mm⁻¹ in the visible light region The absorption and scattering coefficients may be determined by methods well known to those skilled in the art, for example, such as those described in "Solar Spectral Optical Properties of Pigments - Part I: Model for Deriving Scattering and Absorption Coefficients From Transmittance and Reflectance Measurements", R Levinson et al., Solar Energy Materials and Solar Cells 89 (2005) 319-349, the entire contents of which is incorporated herein by reference.

In some embodiments, the organic pigment is one organic pigment having the above described properties (i), (ii) and (iii). In other embodiments, the organic pigment is a mixture of more than one organic pigment, each having the above described properties (i), (ii), and (iii). In yet other embodiments, the colored solar reflective system is characterized by further containing less than about 5% by weight, based on the total weight of the colored solar reflective system, of one or more organic pigments which do not have the above described properties (i), (ii) and (iii). In still another embodiment, the colored solar reflective system is characterized by further containing less than about 2.5 % by weight, preferably less than about 1% by weight, based on the total weight of the colored solar reflective system, of one or more organic pigments which do not have the above described properties (i), (ii) and (iii). In one embodiment, the colored solar reflective system is contains from 0 to 2.5 % by weight, such as from 0.1 to 1% by weight, based on the total weight of the colored solar reflective system, of one or more organic pigments which do not have the above described properties (i), (ii) and (iii).

According to one embodiment, the (or each) organic pigment may be an azo, anthraquinone, phthalocyanine, perinone/perylene, indigo/thioindigo, dioxazine, quinacridone, isoindolinone, isoindoline, diketopyrrolopyrrole, azomethine or azomethine-azo pigment.

The colored solar reflective system may be formed by combining the particulate material and organic pigment. Thus, in one embodiment, the colored solar reflective system may be prepared by a method comprising mixing the particulate material with the organic pigment. Mixing may occur by any known means. As noted above, one aspect of the claimed invention is a method for preparing a colored solar reflective system according to the present invention, the method comprising: mixing the particulate material with the organic pigment.

In still another embodiment, the present disclosure provides a colored composition containing the colored solar reflective system dispersed within a vehicle. As noted above, one aspect of the claimed invention is a product which is a colored composition, the product comprising: a colored solar reflective system according to the present invention and a vehicle, wherein the particulate material and the organic pigment are dispersed within the vehicle. The vehicle may be any component or combination of components within which the colored solar reflective system can be dispersed. The amount of colored solar reflective system included in the colored composition is an amount sufficient to provide about 0.1% by volume to about 20% by volume of organic pigment, based on the total volume of the colored composition, and about 0.5% by volume to about 40% by volume of particulate material, based on the total volume of the colored composition. Thus, in one embodiment, the colored composition comprises about 0.1% by volume to about 20% by volume of organic pigment and about 0.5% by volume to about 40% by volume of particulate material, based on the total volume of the colored composition, dispersed within a vehicle.

According to one embodiment, the vehicle is a synthetic or natural resin. The resin may be, but is not limited to, a polyolefin resin, polyvinyl chloride resin, ABS resin, polystyrene resin, methacrylic resin, polycarbonate resin, polyethylene terephthalate resin, polyamide resin, alkyd resin, acrylic resin, polyurethane resin, polyester resin, melamine resin, fluoropolymer, or epoxy resin.

In another embodiment, the vehicle is a carrier. The carrier may be, but is not limited to, an aqueous solvent, for example, water. The carrier may also be a non-aqueous solvent, for example, an organic solvent such as a petroleum distillate, alcohol, ketone, ester, glycol ether and the like.

In yet another embodiment, the vehicle is a binder. The binder may be, but is not limited to, a metal silicate binder, for example an aluminosilicate binder. The binder may also be a polymeric binder, for example, an acrylic polymer or copolymer binder.

The colored composition may further include one or more customary additives. Additives suitable for use include, but are not limited to, thickeners, stabilizers, emulsifiers, texturizers, adhesion promoters, UV stabilizers, de-glossing agents, dispersants, antifoaming agents, wetting agents, coalescing agents, and biocides/fungicides.

The colored composition may also include one or more spacer particles useful in spacing out or supporting material contained within the composition. The spacer particles may be silica, silicates, aluminates, sulphates, carbonates, clays, or polymeric particles in the form of hollow beads or in the form of microspheres.

The colored composition may be used as a coating composition, for example, as a paint, ink, liquid coating, powder coating, etc., or it may be used as a composition, for example, as a plastic or polymer molding composition, from which articles can be formed by molding, extrusion or other known processes. As noted above, one aspect of the claimed invention is the use of the colored composition of the present invention as a paint, ink or coating or as a composition from which an article can be formed.

Also, as noted above, one aspect of the claimed invention is a product which is a one layer solar reflective colored coating, the product comprising: a colored solar reflective system according to the present invention and a vehicle, wherein the particulate material and the organic pigment are dispersed within the vehicle. Thus, in one embodiment, the present disclosure provides a one layer solar reflective colored coating containing the colored solar reflective system dispersed within the vehicle. In another embodiment, the one layer solar reflective colored coating has a lightness value L* (CIE L*a*b* color space) of 75 or less, preferably 65 or less, more preferably 55 or less, and even more preferably 45 or less.

As mentioned above, the colored solar reflective system also provides enhanced near-infrared reflectivity. Thus, in another embodiment, the one layer solar reflective colored coating has a total solar reflectance of greater than 30%. In still another embodiment, the one layer solar reflective colored coating has a total solar reflectance of greater than 35%, preferably greater than 40%, and even more preferably greater than 45%.

Once formulated, the one layer solar reflective colored coating may be applied to one or more surfaces of a structure. Thus, in another embodiment, the present disclosure provides a structure comprising the one layer solar reflective colored coating. As noted above, one aspect of the claimed invention is a structure, wherein the structure comprises the one layer solar reflective colored coating of the present invention.

In another embodiment the one layer solar reflective colored coating covers a substrate, where the substrate absorbs a proportion of near-infrared radiation. The thickness of the reflective layer is such that more than 1% of the incident near-infrared radiation reaches the substrate. As noted above, one aspect of the claimed invention is a structure, wherein one or more surfaces of the structure are coated with the one layer solar reflective colored coating of the present invention.

In yet still another embodiment, the present disclosure provides a method for reducing the energy consumption of a structure by applying the one layer solar reflective colored coating to one or more surfaces of the structure. The one layer solar reflective colored coating may be applied by any known means, for example, by brushing, rolling spraying, dipping, etc. Because of its enhanced near-infrared reflectivity, the one layer solar reflective colored coating causes the surface temperature of the resultant coated surface to be lowered relative to the surface temperature of a surface coated with a non-reflective coating of the same color. Thus, less energy is needed to cool the interior of the structure. As noted above, one aspect of the claimed invention is a method for reducing the energy consumption of a structure, the method comprising: applying the one layer solar reflective colored coating according to the present invention to one or more surfaces of the structure, wherein the one layer solar reflective colored coating causes the surface temperature of the resultant coated surface to be lowered relative to a surface temperature of a surface coated with a non-reflective coating of the same color such that less energy is needed to cool the interior of the structure.

The one layer solar reflective colored coating presented herein may also be applied to the surface of a structure after one or more primers have been applied to the structure. For example, the surface of the structure may be coated with a primer before application of the one layer colored coating.

The present disclosure also provides an article comprising the colored composition. As noted above, one aspect of the claimed invention is an article comprising the colored composition of the present invention, wherein the article has a lightness value L* (CIE L*a*b* color space) of 75 or less; preferably this value is 65 or less, more preferably 55 or less, and even more preferably 45 or less.

As mentioned above, the colored solar reflective system also provides enhanced near-infrared reflectivity. Thus, in one embodiment, the article of the invention as claimed has a total solar reflectance of greater than 30%. In still another embodiment, the article has a total solar reflectance of greater than 35%, preferably greater than 40%, and even more preferably greater than 45%. Total solar reflectance may be determined according to the method described in ASTM E903.

The present invention will be further illustrated by a consideration of the following examples, which are intended to be exemplary of the invention.

### Examples

Example 1A. An experimental program was undertaken to color match ral 8007 (fawn brown). The target was: L*=39.56, a*=12.20, and b*=18.01. The organic pigments PB60 (Albion Colours Bricofor Blue 3GRP), PY154 (High Performance Colours PY1540) and PR122 (High Performance Colours PR1220), where the PB60 and PY154 were used in combination with titanium dioxide having an average particle size of 1.4 µm. This system was then compared against a system containing the inventive combination of organic pigments PY128 (Ciba 8GNP), PR122 (High Performance Colours PR1220) and PV23 (Ciba Cromophtal Violet Gt) with titanium dioxide having an average particle size of 1.4 µm

A tinter concentrate was prepared for each of the specified pigments (PB60, PY154, PR122, PY128, PV23) using an acrylic resin, a wetting and dispersing additive, a solvent and the specified tint. The quantities of each component are specified in Table 1. This tint concentrate was milled with steel ballotini.

**Table 1: Tinter concentrate components.**

| **Tinter Concentrate Component** | **% by weight** |
|---|---|
| 60% Acrylic Resin (40% solvent) | 78 |
| Solvent | 4 |
| Wetting & Dispersing Additive | 9 |
| Tint | 9 |

A colored resin solution was then made up by taking the quantities specified in Table 2 of each of the required tinter concentrates and vigorously mixing for 2 minutes with the specified amount of additional acrylic resin.

**Table 2: Colored resin solution make up.**

| | **Comparative colored resin** | **Inventive colored resin** |
|---|---|---|
| Tint conc PB60 (g) | 1.6 | 0 |
| Tint conc PY 154 (g) | 26.0 | 0 |
| Tint conc PR122 (g) | 5.2 | 1.5 |
| Tint conc PV23 (g) | 0 | 1.0 |
| Tint conc PY128 (g) | 0 | 13.7 |
| 60% Acrylic Resin (40% solvent) (g) | 0.7 | 16.6 |

The titanium dioxide (quantity specified in table 3) was added to 7.5 g of the colored resin solution to create a millbase which was then vigorously mixed for 30 seconds. This tinted millbase was then let down with a further 13 g of colored resin. This millbase was then milled for an additional 2 minutes.

**Table 3: Quantity of titanium dioxide added to colored resin solution.**

| | **Comparative colored resin** | **Inventive colored resin** |
|---|---|---|
| TiO₂ (g) | 7.1 | 2.75 |
| TiO₂ volume conc. % | 14.5 | 6 |

The test paint was then applied to an opacity chart using a number 150 wire wound applicator; the gauge of which determined the nominal wet film thickness. The solvents were allowed to evaporate and the panel was stoved at 105°C for 30 minutes. This process was then repeated to give a second coating.

Reflectance spectra were measured using a UV/vis/NIR spectrophotometer with an integrating sphere and a wavelength range of 300 nm - 2500 nm. Total Solar Reflectance was calculated from this data, according to the method described in ASTM E903. L*, a* & b* under a D65 illuminant, were also calculated from this data.

In an attempt to reach the same % TSR in the comparative system as in the inventive system, the TiO₂ PVC had to be increased in the comparative system. Despite this increase it was still not possible to achieve the highest % TSR of the inventive system. The required color was also unachievable in the comparative system as the yellow pigment scattered significant light in the visible light region. The blue pigment displayed significant absorption in the region above 760 nm, detracting from the reflectance potential. This can clearly be seen in Figure 1 where there is much less reflectance after 760 nm in the comparative system. Despite the additional titanium dioxide in the comparative system, the % TSR is still lower than in this system as compared to the inventive system due to the absorption in the near-infrared region from the blue pigment. The % TSR for each system is provided in Table 4 below.

**Table 4: % TSR for ral 8007.**

| **ral 8007** | **Comparative system** | **Inventive system** |
|---|---|---|
| % TSR over black | 43.52 | 44.50 |
| % TSR over white | 43.80 | 49.67 |

Example 1B. A PVC plaque was made in color ral 8007 (fawn brown) using titanium dioxide having an average particle size of 1.4 µm. Stock solutions of PY128 (Ciba 8GNP), PR122 (High Performance Colours PR1220) and PV23 (Ciba Cromophtal Violet Gt) were prepared by mixing 40 g of each pigment with 350 g acetyltributyl citrate.

**Table 5: PVC formulation.**

| **Component** | **grams per 100 g resin** |
|---|---|
| PVC Resin | 100 |
| Stearic acid | 0.5 |
| Lankromark LZB320 | 2.5 |
| DIMP | 8.49 |
| PV23 stock solution | 6.5 |
| PR122 stock solution | 10.6 |
| PY128 stock solution | 39.1 |
| TiO₂ | 34.45 |

The PVC plaque was prepared as follows: a dry blend was prepared using a crypto-peerless type mixer. A J.R. Dare two-roll mill (140°C front & 135°C rear roller) was then used to produce PVC. The resultant PVC was preheated for 3 minutes at 165°C then pressed for 2 minutes at 15te/in².

Reflectance spectra were measured using a UV/vis/NIR spectrophotometer with an integrating sphere and a wavelength range of 300 nm - 2500 nm. Total Solar Reflectance was calculated from this data, according to the method described in ASTM E903 and was determined to be equal to 50.87 %.

Example 2. The inventive system of titanium dioxide having an average particle size of 1.4 µm and organic pigments PY180 (Clariant Fast Yellow HG), PR122 (HPC PR1220), PV23 (Ciba Cromophtal Violet Gt), PB15:3 (HPC PB1530), PBlack 32 (BASF Paliogen Black L0086), PO71 (Ciba Irgazin DPP Cosmoray) were used in a paint system to make colored paints to match ral standards 6011, 7010, 7022 and 7034.

A tint concentrate was prepared for each of the specified pigments (PY180, PR122, PV23, PB15:3, PBlack 32, PO71) using an acrylic resin, a wetting and dispersing additive, a solvent and the specified tint. The quantities of each component are specified in Table 6. This tint concentrate was then milled with steel ballotini.

**Table 6: Tinter concentrate components.**

| | **PV23, PB 15:3, PBlack 32** | **PR122, PY180, PO 71** |
|---|---|---|
| **Tinter Concentrate Component** | **% by weight** | **% by weight** |
| 60% Acrylic Resin (40% solvent) | 78 | 71 |
| Solvent | 4 | 4 |
| Wetting & Dispersing Additive | 9 | 8 |
| Tint | 9 | 16 |

A colored resin solution was made up by taking the quantities as specified in Table 7 of each of the required tinter concentrates and vigorously mixing for 2 minutes with the specified amount of additional acrylic resin.

**Table 7: Colored resin solution make up.**

| | **ral 6011 (Reseda green)** | **ral7010 (Tarpaulin grey)** | **ral 7022 (Umbra grey)** | **ral 7034 (Yellow grey)** |
|---|---|---|---|---|
| Tint conc PV23 (g) | - | 1.19 | 7.25 | - |
| Tint conc PR122 (g) | - | | - | - |
| Tint conc PY180 (g) | 3.78 | - | 6.48 | 0.61 |
| Tint conc PO71 (g) | - | 4.15 | - | 2.44 |
| Tint conc PB15:3 (g) | 0.53 | - | - | - |
| Tint conc PBK32 (g) | 10.49 | 26.85 | 19.23 | 4.57 |
| 60% Acrylic Resin (40% solvent) (g) | 17.98 | 1.11 | 0.38 | 24.95 |

The titanium dioxide was added, in the quantities specified in Table 8, to 7.50 g of the colored resin solution to create a millbase which was then vigorously mixed for 30 seconds. This tinted millbase was then let down with a further quantity of 13.00 g colored resin. This millbase was then milled for an additional 2 minutes.

**Table 8: Quantity of titanium dioxide added to colored resin solution.**

| | **ral 6011 (Reseda green)** | **ral 7010 (Tarpaulin grey)** | **ral 7022 (Umbra grey)** | **ral 7034 (Yellow grey)** |
|---|---|---|---|---|
| TiO₂ (g) | 27.9 | 25.6 | 19.1 | 29.2 |
| TiO₂ volume conc. % | 40.0 | 41.0 | 33.5 | 40.0 |

The paint was drawn down over a black substrate using a number 6 wire wound applicator to give a dry film thickness of about 28 microns. The solvents were allowed to evaporate and the panel was then stoved at 105°C for 30 minutes. Reflectance spectra were measured using a UV/vis/NIR spectrophotometer with an integrating sphere and a wavelength range of 300 nm - 2500 nm. Total Solar Reflectance was calculated from this data, according to the method described in ASTM E903.

The % TSR was compared with data collated from publicly available TSR values for systems optimized using complex color inorganic pigments. The known TSR values were reported to be calculated according to ASTM E903 (weighted ordinates for 300-2500 nm), measured on topcoat and primer. The inventive system was thus not optimized since the solar reflectance was measured over a black substrate but it can be seen from Table 9 that there is still a significant increase in % TSR for the inventive system.

**Table 9: % TSR values for various ral numbers.**

| **ral number** | **Color** | **CICP % TSR** | **Inventive % TSR** | **% TSR uplift** |
|---|---|---|---|---|
| 6011 | Reseda green | 35 | 48 | 13 |
| 7010 | Tarpaulin grey | 37 | 47 | 10 |
| 7022 | Umbra grey | 32 | 45 | 13 |
| 7034 | Yellow grey | 44 | 54 | 10 |

Example 3. Ral 7024 (graphite grey) was made using 4 different titanium dioxide average particle sizes (0.7 micron, 1.1 micron, 1.4 micron, and 1.7 micron) and organic pigments PY180 (Clariant Fast Yellow HG), PV23 (Ciba Cromophtal Violet Gt), PBlack 32 (BASF Paliogen Black L0086). The organic pigments were made into tinter concentrates as detailed in Table 6 above. A colored resin solution was then made up by taking the quantities as specified in Table 10 of each of the required tinter concentrates and vigorously mixing for 2 minutes with the specified amount of additional acrylic resin.

**Table 10: Colored resin solution make up and quantity of titanium dioxide added to colored resin solution.**

| | **0.7 µm TiO2** | **1.1 µm TiO2** | **1.4 µm TiO2** | **1.7 µm TiO2** |
|---|---|---|---|---|
| Tint conc PV23 (g) | 3.60 | 1.19 | 1.03 | 0.64 |
| Tint conc PY180 (g) | 0.18 | 0.04 | 0.01 | 0.08 |
| Tint conc PBK32 (g) | 21.42 | 7.76 | 6.86 | 3.54 |
| 60% Acrylic Resin (40% solvent) (g) | 7.9 | 23.62 | 24.68 | 28.2 |
| TiO₂ (g) | 4.64 | 4.92 | 4.80 | 5.00 |

The titanium dioxide was added to 7.50 g of the colored resin solution to create a millbase which was then vigorously mixed for 30 seconds. This tinted millbase was then let down with a further quantity of 13.00 g colored resin. This millbase was then milled for a further 2 minutes. This produced a TiO₂ volume concentration of 10% in all four paints.

The paint was drawn down over a substrate using a number 150 wire wound applicator to give a dry film thickness of about 77 microns. The solvents were allowed to evaporate and the panel was stoved at 105 °C for 30 minutes. Reflectance spectra were measured using a UV/vis/NIR spectrophotometer with an integrating sphere and a wavelength range of 300 nm - 2500 nm. Total Solar Reflectance was calculated from this data, according to the method described in ASTM E903 and the results are provided in Table 11.

**Table 11: TSR results for ral 7024.**

| **ral 7024** | **0.7 µm TiO₂** | **1.1 µm TiO₂** | **1.4 µm TiO₂** | **1.7 µm TiO₂** |
|---|---|---|---|---|
| % TSR over black substrate | 47.48 | 42.85 | 42.13 | 35.69 |
| % TSR over white substrate | 49.87 | 49.67 | 49.65 | 48.50 |

The 0.7 micron particle size TiO₂ gives the highest TSR value but requires a large amount of organics to be added to keep the color due to the effect of pastelisation from the TiO₂. The 1.1 and 1.4 micron TiO₂ still give a high TSR value but use about 2/3 the amount of organics when compared to the 0.7 micron particle size TiO₂.

## Claims

1. A colored solar reflective system comprising:
(1) a particulate material having a substantially rutile crystal habit and having an average particle size of between about 0.6 µm and about 1.7 µm, wherein the particulate material is selected from the group consisting of: titanium dioxide, doped titanium dioxide and a mixture thereof; and
(2) an organic pigment having a maximum absorption coefficient of about 5,000 mm⁻¹ or greater, in the visible light region, a maximum scattering coefficient of about 500 mm⁻¹ or less, in the visible light region and an average absorption coefficient of about 50 mm⁻¹ or less in the infrared region, wherein the organic pigment is one or more organic particle that is substantially insoluble in the application medium in which it is dispersed and which imparts color.

2. The colored solar reflective system of claim 1, wherein the organic pigment has:
(a) a maximum absorption coefficient of about 10,000 mm⁻¹ or greater, preferably about 15,000 mm⁻¹ or greater, in the visible light region; and/or
(b) a maximum scattering coefficient of about 250 mm⁻¹ or less, preferably about 100 mm⁻¹ or less, in the visible light region; and/or
(c) an average absorption coefficient of about 30 mm⁻¹ or less, preferably about 10 mm⁻¹ or less, in the infrared region.

3. The colored solar reflective system of claim 1 or 2, wherein the particulate material:
(a) contains greater than 70% by weight of titanium dioxide, based on the total weight of the particulate material; or
(b) is doped titanium dioxide which is nickel antimony titanate; or
(c) is doped titanium dioxide which is chromium antimony titanate; or
(d) is titanium dioxide that has an average particle size of between about 0.7 µm and about 1.4 µm.

4. The colored solar reflective system of any one of claims 1-3, wherein the particulate material is coated titanium dioxide and/or coated doped titanium dioxide.

5. The colored solar reflective system of any one of claims 1-4, wherein the organic pigment is selected from the group consisting of: azo, anthraquinone, phthalocyanine, perinone/perylene, indigo/thioindigo, dioxazine, quinacridone, isoindolinone, isoindoline, diketopyrrolopyrrole, azomethine and azomethine-azo pigments.

6. A method for preparing a colored solar reflective system as defined in claim 1, the method comprising:
mixing a particulate material as defined in any one of claims 1, 3 or 4 with an organic pigment as defined in any one of claims 1, 2 or 5.

7. A product which is (a) a colored composition or (b) a one layer solar reflective colored coating, the product comprising: a colored solar reflective system as defined in any one of claims 1-5 and a vehicle, wherein the particulate material and the organic pigment are dispersed within the vehicle.

8. The colored composition of claim 7, option (a), wherein:
(i) the organic pigment is present at an amount of about 0.1% by volume to about 20% by volume, based on the total weight of the colored composition, and the particulate material is present at an amount of about 0.5% by volume to about 40% by volume, based on the total weight of the colored composition.
(ii) the vehicle is: a synthetic or natural resin comprising a polyolefin resin, polyvinyl chloride resin, ABS resin, polystyrene resin, methacrylic resin, polycarbonate resin, polyethylene terephthalate resin, polyamide resin, alkyd resin, acrylic resin, polyurethane resin, polyester resin, melamine resin, fluoropolymer or epoxy resin; or a carrier or binder.
(iii) the composition further comprises one or more thickeners, stabilizers, emulsifiers, texturizers, adhesion promoters, UV stabilizers, de-glossing agents, dispersants, antifoaming agents, wetting agents, coalescing agents, spacer particles or biocides/fungicides.

9. Use of the colored composition of claim 7, option (a) or claim 8, as a paint, ink or coating or as a composition from which an article can be formed.

10. The one layer solar reflective colored coating of claim 7, option (b), wherein:
(i) the coating covers a substrate which absorbs a proportion of near-infrared radiation and wherein the thickness of the layer is such that more than 1% of the incident near-infrared radiation reaches the substrate; and/or
(ii) the coating has a lightness value L* of 75 or less, preferably 65 or less, more preferably 55 or less, and even more preferably 45 or less; and/or
(iii) the coating has a total solar reflectance of greater than 30%, preferably greater than 35%, even more preferably greater than 40%, and even more preferably greater than 45%.

11. A structure, wherein:
(i) the structure comprises the one layer solar reflective colored coating according to claim 7, option (b) or claim 10; or
(ii) one or more surfaces of the structure are coated with the one layer solar reflective colored coating according to claim 7, option (b) or claim 10.

12. A method for reducing the energy consumption of a structure, the method comprising:
applying the one layer solar reflective colored coating of claim 7, option (b) or claim 10 to one or more surfaces of the structure, wherein the one layer solar reflective colored coating causes the surface temperature of the resultant coated surface to be lowered relative to a surface temperature of a surface coated with a non-reflective coating of the same color such that less energy is needed to cool the interior of the structure.

13. An article comprising the colored composition of claim 7, option (a) or claim 8, wherein the article has a lightness value L* of 75 or less.

14. The article of claim 13, wherein:
(a) the article has a lightness value L* of 65 or less, preferably 55 or less, and more preferably 45 or less; and/or
(b) the article has a total solar reflectance of greater than 30%, preferably greater than 35%, more preferably greater than 40%, and even more preferably greater than 45%.

15. Use of the colored composition of claim 7, option (b) or claim 8, or the coating of claim 7, option (b) or claim 10, as a one layer solar reflective colored coating.

## Patentansprüche

1. Farbiges Sonnenreflektionssystem, umfassend:
(1) Ein Partikelmaterial mit einem im Wesentlichen aus Rutil bestehenden Kristallhabitus und mit einer mittleren Partikelgröße von ca. 0,6 µm bis ca. 1,7 µm, worin die Partikelmaterialien ausgewählt sind aus der Gruppe, bestehend aus: Titandioxid, dotiertem Titandioxid und einer Mischung davon; und
(2) Ein organisches Pigment mit einem maximalen Absorptionskoeffizienten von ca. 5000 mm⁻¹ oder mehr im sichtbaren Lichtbereich, einem maximalen Streukoeffizienten von ca. 500 mm⁻¹ oder weniger im sichtbaren Lichtbereich, und einem mittleren Absorptionskoeffizienten von ca. 50 mm⁻¹ oder weniger im Infrarotbereich, worin das organische Pigment mindestens ein organischer Partikel ist, welcher im Wesentlichen im Applikationsmedium, in dem er dispergiert ist und dem er Farbe verleiht, unlöslich ist.

2. Farbiges Sonnenreflektionssystem aus Anspruch 1, worin das organische Pigment Folgendes hat:
(a) einen maximalen Absorptionskoeffizienten von ca. 10.000 mm⁻¹ oder größer, bevorzugt von ca. 15.000 mm⁻¹ oder größer, im sichtbaren Lichtbereich; und/oder
(b) einen maximalen Streukoeffizienten von ca. 250 mm⁻¹ oder weniger, bevorzugt ca. 100 mm⁻¹ oder weniger, im sichtbaren Lichtbereich; und/oder
(c) einen mittleren Absorptionskoeffizienten von ca. 30 mm⁻¹ oder weniger, bevorzugt von ca. 10 mm⁻¹ oder weniger, im Infrarotbereich.

3. Farbiges Sonnenreflektionssystem aus Anspruch 1 oder 2, worin das Partikelmaterial:
(a) mehr als 70 Gew.-% Titandioxid enthält, basierend auf dem Gesamtgewicht des Partikelmaterials; oder
(b) dotiertes Titandioxid ist, welches Nickelantimontitanat ist; oder
(c) dotiertes Titandioxid ist, welches Chromantimontitanat ist; oder
(d) Titandioxid mit einer mittleren Partikelgröße von ca. 0,7 µm und ca. 1,4 µm ist.

4. Farbiges Sonnenreflektionssystem aus irgendeinem der Ansprüche 1-3, worin das Partikelmaterial beschichtetes Titandioxid und/oder beschichtetes, dotiertes Titandioxid ist.

5. Farbiges Sonnenreflektionssystem aus irgendeinem der Ansprüche 1-4, worin das organische Pigment ausgewählt ist aus der Gruppe, bestehend aus: Azo-, Anthraquinon-, Phtalocyanin-, Perinon-/Perylen-, Indigo-/Thioindigo-, Dioxazin-, Quinacridon-, Isoindolinon-, Isoindolin-, Diketopyrrolopyrrol-, Azomethin- und Azomethinazopigmenten.

6. Verfahren zur Herstellung eines farbigen Sonnenreflektionssystems, wie in Anspruch 1 definiert, wobei das Verfahren Folgendes umfasst:
Mischen eines Partikelmaterials, wie in irgendeinem der Ansprüche 1, 3 oder 4 definiert, mit anorganischem Pigment, wie in irgendeinem der Ansprüche 1, 2 oder 5 definiert.

7. Produkt, welches (a) eine farbige Zusammensetzung oder (b) eine einlagige farbige Sonnenreflektionsbeschichtung ist, wobei das Produkt Folgendes umfasst: Ein farbiges Sonnenreflektionssystem, wie in irgendeinem der Ansprüche 1-5 definiert, und eine Trägersubstanz, worin das Partikelmaterial und das organische Pigment innerhalb der Trägersubstanz dispergiert sind.

8. Farbige Zusammensetzung aus Anspruch 7, Option (a), worin:
(i) das organische Pigment in einer Menge von ca. 0,1 Gew.-% bis ca. 20 Gew.-%, basierend auf dem Gesamtgewicht der farbigen Zusammensetzung, vorliegt, und das Partikelmaterial in einer Menge von ca. 0,5 Gew.-% bis ca. 40 Gew.-%, basierend auf dem Gesamtgewicht der farbigen Zusammensetzung, vorliegt.
(ii) die Trägersubstanz Folgendes ist: ein synthetisches oder natürliches Harz, umfassend ein Polyolefinharz, Polyvinylchloridharz, ABS-Harz, Polystyrolharz, Methacrylharz, Polycarbonatharz, Polyethylenterephthalatharz, Polyamidharz, Alkydharz, Acrylharz, Polyurethanharz, Polyesterharz, Melaminharz, Fluoropolymer- oder Epoxidharz; oder ein Träger oder ein Bindemittel.
(iii) die Zusammensetzung des Weiteren ein oder mehrere Verdickungsmittel, Stabilisatoren, Emulgatoren, Texturierungsmittel, Haftvermittler, Mattierungsmittel, Dispersionsmittel, Antischäumungsmittel, Befeuchtungsmittel, Koaleszenzmittel, Abstandspartikel oder Biozide/Fungizide umfasst.

9. Verwendung der farbigen Zusammensetzung aus Anspruch 7, Option (a) oder Anspruch 8 als Lack, Farbe oder Beschichtung oder als Zusammensetzung, aus der sich ein Artikel bilden lässt.

10. Einlagige farbige Sonnenreflektionsbeschichtung aus Anspruch 7, Option (b), worin:
(i) Die Beschichtung ein Substrat bedeckt, welches einen Teil der Nahinfrarotstrahlung absorbiert, und worin die Dicke der Schicht dergestalt ist, dass mehr als 1 % der einfallenden Nachinfrarot-Strahlung das Substrat erreichen; und/oder
(ii) Die Beschichtung einen Helligkeitswert L* von 75 oder weniger, bevorzugt von 65 oder weniger, mehr bevorzugt von 55 oder weniger und noch mehr bevorzugt von 45 oder weniger hat; und/oder
(iii) Die Beschichtung eine Sonnengesamtreflektanz von über 30 % hat, bevorzugt von über 35 %, noch mehr bevorzugt von über 40 % und noch mehr bevorzugt von mehr als 45 %.

11. Struktur, worin:
(i) Die Struktur die einlagige farbige Sonnenreflektionsbeschichtung nach Anspruch 7, Option (b), oder nach Anspruch 10 umfasst; oder
(ii) Eine oder mehrere Oberflächen der Struktur mit der einlagigen farbigen Sonnenreflektionsbeschichtung nach Anspruch 7, Option (b), oder nach Anspruch 10 beschichtet ist bzw. sind.

12. Verfahren zur Reduzierung des Energieverbrauchs einer Struktur, wobei das Verfahren Folgendes umfasst:
Anwendung der einlagigen farbigen Sonnenreflektionsbeschichtung aus Anspruch 7, Option (b), oder aus Anspruch 10 auf eine oder mehrere Oberflächen der Struktur, worin die einlagige farbige Sonnenreflektionsbeschichtung das Absenken der Oberflächentemperatur der resultierenden beschichteten Oberfläche im Verhältnis zu einer Oberflächentemperatur einer mit einer nichtreflektierenden Beschichtung derselben Farbe beschichteten Oberfläche bewirkt, sodass weniger Energie zum Kühlen des Strukturinneren benötigt wird.

13. Artikel umfassend die farbige Zusammensetzung aus Anspruch 7, Option (a), oder aus Anspruch 8, worin der Artikel einen Helligkeitswert L* von 75 oder weniger hat.

14. Artikel aus Anspruch 13, worin:
(a) Der Artikel einen Helligkeitswert L* von 65 oder weniger hat, bevorzugt von 55 oder weniger, und mehr bevorzugt von 45 oder weniger und/oder
(b) Der Artikel eine Sonnengesamtreflektanz von über 30 % hat, bevorzugt von über 35 %, mehr bevorzugt von über 40 % und noch mehr bevorzugt von mehr als 45 %.

15. Verwenden der farbigen Zusammensetzung aus Anspruch 7, Option (b), oder aus Anspruch 8, oder der Beschichtung aus Anspruch 7, Option (b), oder aus Anspruch 10, als einlagige farbige Sonnenreflektionsbeschichtung.

## Revendications

1. Un système de réflectance solaire coloré comprenant :
(1) un matériau particulaire ayant un habitus cristallin essentiellement de rutile et ayant une taille moyenne de particules entre 0,6 µm et 1,7 µm environ, dans lequel le matériau particulaire est sélectionné dans le groupe se composant de : dioxyde de titane, dioxyde de titane dopé et d'un mélange de ceux-ci ; et
(2) un pigment organique ayant un coefficient d'absorption maximal supérieur ou égal à environ 5000 mm⁻¹, dans la zone de lumière visible, un coefficient de dispersion maximal inférieur ou égal à environ 500 mm⁻¹, dans la zone de lumière visible et un coefficient d'absorption moyen inférieur ou égal à environ 50 mm⁻¹ dans la zone infrarouge, dans lequel le pigment organique se compose d'au moins une particule organique qui est essentiellement insoluble dans le milieu d'application dans lequel il est dispersé et qui donne de la couleur.

2. Le système de réflectance solaire coloré de la revendication 1, dans lequel le pigment organique a :
(a) un coefficient d'absorption maximal supérieur ou égal à environ 10 000 mm⁻¹, de préférence supérieur ou égal à environ 15 000 mm⁻¹, dans la zone de lumière visible ; et/ou
(b) un coefficient de dispersion maximal inférieur ou égal à environ 250 mm⁻¹, de préférence inférieur ou égal à environ 100 mm⁻¹, dans la zone de lumière visible ; et/ou
(c) un coefficient d'absorption moyen inférieur ou égal à environ 30 mm⁻¹, de préférence inférieur ou égal à environ 10 mm⁻¹, dans la zone infrarouge.

3. Le système de réflectance solaire coloré de la revendication 1 ou 2, dans lequel le matériau particulaire :
(a) contient plus de 70 % en poids de dioxyde de titane, basé sur le poids total du matériau particulaire ; ou
(b) est du dioxyde de titane dopé qui est du titanate d'antimoine et de nickel ; ou
(c) est du dioxyde de titane dopé qui est du titanate d'antimoine et de chrome ; ou
(d) est du dioxyde de titane avec une taille moyenne de particules d'entre 0,7 µm et 1,4 µm environ.

4. Le système de réflectance solaire coloré de n'importe laquelle des revendications 1 à 3, dans lequel le matériau particulaire est du dioxyde de titane enrobé et/ou du dioxyde de titane dopé enrobé.

5. Le système de réflectance solaire coloré de n'importe laquelle des revendications 1 à 4, dans lequel le pigment organique est sélectionné dans le groupe se composant de : pigments azo, anthraquinone, phtalocyanine, périnone/pérylène, indigo/thioindigo, dioxazine, quinacridone, isoindolinone, isoindoline, dicetopyrrolopyrrole, azométhine et azo-azométhine.

6. Un procédé de préparation d'un système de réflectance solaire coloré tel que défini à la revendication 1, le procédé comprenant :
le mélange d'un matériau particulaire tel que défini dans n'importe laquelle des revendications 1, 3 ou 4 avec un pigment organique tel que défini dans n'importe laquelle des revendications 1, 2 ou 5.

7. Un produit qui est (a) une composition colorée ou (b) un revêtement coloré de réflectance solaire à couche unique, le produit comprenant : un système de réflectance solaire coloré tel que défini dans n'importe laquelle des revendications 1 à 5 et un véhicule, dans lequel le matériau particulaire et le pigment organique sont dispersés dans le véhicule.

8. La composition colorée de la revendication 7, option (a), dans laquelle :
(i) le pigment organique est présent dans une quantité d'environ 0,1 % par volume à environ 20 % par volume, basé sur le poids total de la composition colorée, et le matériau particulaire est présent dans une quantité d'environ 0,5 % par volume à environ 40 % par volume, basé sur le poids total de la composition colorée.
(ii) le véhicule est : une résine naturelle ou synthétique comprenant une résine de polyoléfine, une résine de polychlorure de vinyle, une résine ABS, une résine de polystyrène, une résine méthacrylique, une résine de polycarbonate, une résine de polytéréphtalate d'éthylène, une résine de polyamide, une résine alkyde, une résine acrylique, une résine de polyuréthane, une résine de polyester, une résine de mélamine, une résine époxy ou de fluoropolymère ; ou un support ou un liant.
(iii) la composition comprend en outre au moins un élément parmi les agents épaississants, stabilisants, émulsifiants, texturisants, promoteurs d'adhérence, stabilisants d'UV, matifiants, dispersants, anti-mousse, mouillants, coalescents, les particules d'espacement ou les biocides/fongicides.

9. L'utilisation de la composition colorée de la revendication 7, option (a) ou de la revendication 8, en tant que peinture, encre ou revêtement ou en tant que composition à partir de laquelle un article peut être formé.

10. Le revêtement coloré de réflectance solaire à couche unique de la revendication 7, option (b), dans lequel :
(i) le revêtement recouvre un substrat qui absorbe une proportion de rayonnement infrarouge proche et dans lequel l'épaisseur de la couche est telle que plus d'1 % du rayonnement infrarouge proche incident atteint le substrat ; et/ou
(ii) le revêtement a une valeur de luminosité L* inférieure ou égale à 75, de préférence inférieure ou égale à 65, plus préférentiellement encore inférieure ou égale à 55, et plus préférentiellement encore inférieure ou égale à 45 ; et/ou
(iii) le revêtement a une réflectance solaire totale supérieure à 30 %, de préférence supérieure à 35 %, plus préférentiellement encore supérieure à 40 %, et plus préférentiellement encore supérieure à 45 %.

11. Une structure, dans laquelle :
(i) la structure comprend le revêtement coloré de réflectance solaire à couche unique selon la revendication 7, option (b) ou la revendication 10 ; ou
(ii) au moins une des surfaces de la structure est revêtue du revêtement coloré de réflectance solaire à couche unique selon la revendication 7, option (b) ou la revendication 10.

12. Un procédé de réduction de la consommation d'énergie d'une structure, le procédé comprenant :
l'application du revêtement coloré de réflectance solaire à couche unique de la revendication 7, option (b) ou de la revendication 10 à au moins une des surfaces de la structure, dans lequel le revêtement coloré de réflectance solaire à couche unique entraîne une réduction de la température de surface de la surface revêtue obtenue par rapport à la température de surface d'une surface revêtue d'un revêtement anti-réfléchissant de la même couleur de sorte que le refroidissement de l'intérieur de la structure demande moins d'énergie.

13. Un article comprenant la composition colorée de la revendication 7, option (a) ou de la revendication 8, dans lequel l'article a une valeur de luminosité L* inférieure ou égale à 75.

14. L'article de la revendication 13, dans lequel :
(a) l'article a une valeur de luminosité L* inférieure ou égale à 65, de préférence inférieure ou égale à 55, et de préférence encore inférieure ou égale à 45 ; et/ou
(b) l'article a une réflectance solaire totale supérieure à 30 %, de préférence supérieure à 35 %, de préférence encore supérieure à 40 %, et de préférence encore supérieure à 45 %.

15. L'utilisation de la composition colorée de la revendication 7, option (b) ou de la revendication 8, ou du revêtement de la revendication 7, option (b) ou de la revendication 10, en tant que revêtement coloré de réflectance solaire à couche unique.
